# EUROPÄISCHE PATENTSCHRIFT

(11) **EP 2 495 636 B1**
(45) Veröffentlichungstag und Bekanntmachung des Hinweises auf die Patenterteilung: **18.01.2017**
(21) Anmeldenummer: 11156607.1
(22) Anmeldetag: 02.03.2011
(51) Int. Cl.: G06F 1/24, G06F 1/30

(54) **VERFAHREN ZUM BETREIBEN EINES ELEKTRISCHEN GERÄTES DAS EINEN MASSENSPEICHER AUFWEIST**
METHOD FOR OPERATING AN ELECTRIC DEVICE COMPRISING A MASS STORAGE DEVICE
PROCÉDÉ DE FONCTIONNEMENT D'UN APPAREIL ÉLECTRIQUE COMPRENANT UNE MÉMOIRE DE MASSE

(43) Veröffentlichungstag der Anmeldung: 05.09.2012
(73) Patentinhaber: Siemens Aktiengesellschaft, 80333 München (DE)
(72) Erfinder: Spuhler, Bernhard, 76877 Offenbach (DE)

(56) Entgegenhaltungen:
- JP-A- 2000 122 813
- US-A- 5 831 460
- US-A- 6 011 667
- US-A1- 2010 053 796

## Beschreibung

Die Erfindung betrifft ein Verfahren zum Betreiben eines elektrischen Gerätes, das einen Massenspeicher aufweist, welcher mit einer Versorgungsspannung beaufschlagt wird und welchem über eine Leitung Daten seriell übertragen werden, wobei der Massenspeicher mittels eines Hardware-Resets in einen definierten Anfangszustand gesetzt wird, falls die Versorgungsspannung eine Schwellspannung unterschreitet. Darüber hinaus betrifft die Erfindung ein elektrisches Gerät, welches zur Durchführung des Verfahrens geeignet ist.

In zunehmendem Maße werden in so genannten z. B. aus dem Siemens-Katalog ST 80/ST PC, Kapitel 5, Ausgabe 2010 bekannten Industrie Personal Computern (Industrie PCs) Massenspeicher eingesetzt, die mit einer seriellen Schnittstelle versehen sind. Im Unterschied zu einem mit einer parallelen Schnittstelle versehenen Massenspeicher weist ein seriell betriebener Massenspeicher keinen Anschluss (Hardware-Reset-Eingang) zum Anschließen einer Reset-Leitung auf, mittels welcher im Rahmen eines Hardware-Resets der Massenspeicher zurückgesetzt, d. h. in einen definierten Anfangszustand gesetzt werden kann. Ein Zurücksetzen des Massenspeichers ist gewöhnlich dann erforderlich, falls dessen Betrieb gestört ist und auf die dort gespeicherten Daten nicht mehr lesend und/oder schreibend zugegriffen werden kann. Anstatt eines Hardware-Resets ist für einen eine serielle Schnittstelle aufweisenden Massenspeicher lediglich ein softwaregesteuertes Rücksetzen vorgesehen. Ein softwaregesteuertes Rücksetzen kann allerdings nur dann verwirklicht werden, wenn die Firmware des Massenspeichers weitgehend funktionsfähig ist und dadurch die übermittelte Software-Reset-Anweisung bzw. der übermittelte Software-Reset-Befehl verarbeitet werden kann. Für den Fall, dass die Firmware diese Anweisung bzw. diesen Befehl nicht mehr verarbeiten kann, wird der Massenspeicher, dessen Betrieb gestört ist, nicht zurückgesetzt, was bedeutet, dass in diesem Zustand ein Zugriff auf die dort hinterlegten Daten nicht möglich ist. In diesem Fall muss der Industrie PC neu gestartet werden, was die Unterbrechung einer Prozesssteuerung bedeutet.

US 6,011,667 offenbart ein ein Reset-Modul aufweisendes Speichersystem, welches mit unterschiedlichen Spannungen betreibbar ist, wobei in Abhängigkeit der Betriebsspannung in einen Betriebsmodus geschaltet wird.

US 5,831,460 beschreibt eine Reset-Schaltung für Speicherzellen, wobei Maßnahmen vorgesehen sind, welche einerseits einen ordnungsgemäßen Betrieb sicherstellen, falls die Versorgungsspannung für die Speicherzellen ausreichend ist und andererseits nicht erwünschte Resets aufgrund geringer Wertschwankungen bezüglich der Versorgungsspannung vermeiden.

Der Erfindung liegt daher die Aufgabe zugrunde, ein Verfahren der eingangs genannten Art anzugeben, welches die Verfügbarkeit des elektrischen Gerätes erhöht. Darüber hinaus ist ein elektrisches Gerät zu schaffen, welches zur Durchführung des Verfahrens geeignet ist.

Diese Aufgabe wird im Hinblick auf das Verfahren durch die im kennzeichnenden Teil des Anspruchs 1, bezüglich des elektrischen Gerätes durch die im kennzeichnenden Teil des Anspruchs 4 angegebenen Maßnahmen gelöst.

Die Erfindung geht von der Idee aus, eine ohnehin vorhandene Spannungsüberwachungseinheit des Massenspeichers zu nutzen, um diesen mittels eines internen Hardware-Resets in einen definierten Anfangszustand zu setzen. Diese Spannungsüberwachungseinheit erzeugt gewöhnlich dann einen Hardware-Reset im Massenspeicher, falls die Spannungsüberwachungseinheit erkennt, dass die Versorgungsspannung eine Schwellspannung unterschreitet, was auf eine Störung der Versorgungsspannung hinweist. Mit anderen Worten: mittels einer kontrollierten Spannungsabsenkung werden ein Hardware-Reset ermöglicht und dadurch Fehlerzustände im Massenspeicher aufgelöst, ohne dass der Massenspeicher einen Hardware-Reset-Eingang zum Anschließen einer Reset-Leitung zur Übermittlung eines Reset-Signals aufweist.

Vorteilhaft ist, dass ein Neustart des elektrischen Gerätes nicht mehr erforderlich ist, um den Massenspeicher in einen definierten Anfangszustand zu setzen, wodurch die Verfügbarkeit des Gerätes erhöht wird. Der Massenspeicher, beispielsweise ein Massenspeicher in Form eines Festplattenlaufwerks, muss nicht neu anlaufen, was bedeutet, dass die Dauer der Störung vermindert ist.

In einer Ausgestaltung der Erfindung ist vorgesehen, dass der Massenspeicher-Treiberbaustein das Reset-Signal erzeugt und dem Reset-Modul zuführt. Mittels derartiger Maßnahmen wird ein Hardware-Reset im Massenspeicher automatisch ausgelöst, ein Anwender braucht das Gerät nicht neu zu starten.

Auch kann mittels eines mechanischen Schalters des elektrischen Gerätes das Reset-Signal erzeugt und dem Reset-Modul zugeführt werden. Vorzugsweise kann mittels dieses Schalters der Massenspeicher gezielt in einen Reset-Zustand gesetzt und inaktiv gehalten werden, um beispielsweise einen Transportschutz bzw. eine Transportsicherung zu verwirklichen. In einer ersten Schalterstellung wird der Massenspeicher in einen Ruhezustand versetzt, in welchem vermieden wird, dass der Massenspeicher Positionierungsbewegungen ausführt, und in einer zweiten Schalterstellung ist der Massenspeicher in einen Betriebszustand geschaltet, was bedeutet, die Transportsicherung bzw. der Transportschutz ist entfernt bzw. gelöst.

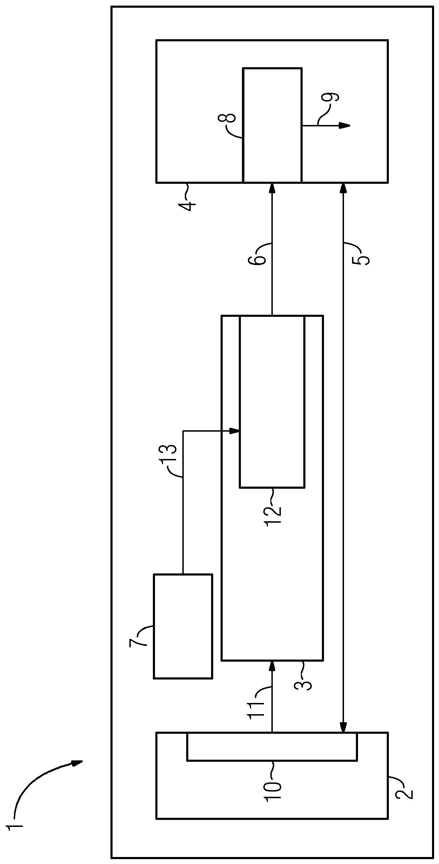

Die Erfindung wird nachfolgend anhand eines Ausführungsbeispiels unter Bezugnahme auf die einzige Figur der Zeichnung näher erläutert. Die Figur der Zeichnung zeigt in vereinfachter Form Bestandteile eines elektrischen Gerätes.

In der Figur ist mit 1 eine Systemeinheit eines Industrie PCs (Industrie Personal Computer) bezeichnet, in welcher ein CPU-Modul 2, ein Reset-Modul 3 und ein Massenspeicher 4 in Form eines Festplattenlaufwerks angeordnet sind. Diese Module 2, 3, 4 sind als Steckkarten ausgebildet, welche in dazu vorgesehene Steckplätze eines so genannten Motherboards der Systemeinheit 1 gesteckt sind. An diese Systemeinheit 1 sind Bedieneingabe-Einheiten, z. B. Bedieneingabe-Einheiten in Form einer Tastatur und/oder einer Maus, sowie mindestens ein Bildwiedergabegerät und weitere Hardware-Einheiten anschließbar. Selbstverständlich weist das Motherboard weitere Steckplätze zur Aufnahme weiterer Steckkarten auf, z. B. Steckkarten zur Verwirklichung einer Ethernet- oder Feldbuskommunikation. Weitere Bestandteile der Systemeinheit 1, wie beispielsweise Netzteil oder sonstige für den Betrieb des Industrie PCs geeignete Hardwaremittel, sind für die Erfindung ohne Bedeutung und werden daher nicht erläutert.

Eine Datenleitung 5 ist für einen seriellen Datenaustausch zwischen dem CPU-Modul 2 und dem Massenspeicher 4 vorgesehen, wobei dazu das CPU-Modul 2 und der Massenspeicher 4 geeignete Anschlüsse zum Anschließen an diese Datenleitung 5 aufweisen. Ferner ist der Massenspeicher 4 mit einem Anschluss zum Anschließen an eine Versorgungsleitung 6 versehen, über welche der Massenspeicher 4 mit einer für dessen Betrieb geeigneten Versorgungsspannung beaufschlagt ist, welche eine Stromversorgung 7 aus einer hier nicht dargestellten Eingangsspannung erzeugt. Eine Spannungsüberwachungseinheit 8 des Massenspeichers 4 überwacht die Versorgungsspannung und erzeugt einen internen Hardware-Reset 9, falls diese Einheit 8 erkennt, dass die Versorgungsspannung eine Schwellspannung unterschreitet, was auf eine Störung hinweist. Dieser Hardware-Reset 9 bewirkt, dass Rücksetzmittel des Massenspeichers 4 diesen in einen definierten Anfangszustand versetzen. Aus diesem Zustand kann - ohne dass Initialisierungsroutinen gestartet und/oder Register des Massenspeichers 4 zurückgesetzt werden müssen - der Betrieb des Massenspeichers 4 wieder aufgenommen werden, falls die Versorgungsspannung so weit ansteigt, dass die Schwellspannung überschritten wird.

Es kann vorkommen, dass aufgrund einer nicht durch eine Spannungsunterbrechung bewirkten Störung auf die im Massenspeicher 4 hinterlegten Daten nicht mehr lesend und/oder schreibend zugegriffen werden kann, was ein auf dem CPU-Modul 2 verarbeitbarer Massenspeicher-Treiberbaustein 10 aufgrund des fehlenden oder gestörten Informationsaustausches zwischen dem CPU-Modul 2 und dem Massenspeicher 4 erkennt. Um in diesem Fall die Systemeinheit 1 des Industrie PCs nicht zurücksetzen zu müssen, was sich nachteilig auf die Verfügbarkeit des Industrie PCs auswirkt, übermittelt der Massenspeicher-Treiberbaustein 10 dem Reset-Modul 3 ein Reset-Signal 11, aufgrund dessen das Reset-Modul 3 die von der Stromversorgung 7 bereitgestellte Versorgungsspannung beeinflusst. Die Beeinflussung erfolgt in der Art und Weise, dass das Reset-Modul 3 mittels geeigneter Spannungsbegrenzungsmittel 12, welche über eine Leitung 13 mit der Versorgungsspannung beaufschlagt werden, die Versorgungsspannung unter die Schwellspannung begrenzt oder herabsetzt, wodurch in der beschriebenen Art und Weise die Spannungsüberwachungseinheit 8 den Hardware-Reset 9 erzeugt und daher den Massenspeicher 4 in einen definierten Anfangszustand zurücksetzt. Nach einer vorgegebenen Zeitspanne von z. B. ca. 5 Millisekunden deaktiviert der Massenspeicher-Treiberbaustein 10 das Reset-Signal 11, wodurch die Spannungsbegrenzungsmittel 12 ebenfalls deaktiviert werden. Dadurch wird der Massenspeicher 4 mit der für den störungsfreien Betrieb erforderlichen Versorgungsspannung beaufschlagt, die oberhalb der Schwellspannung liegt.

Mittels der beschriebenen Maßnahmen wird der Massenspeicher in einen definierten Anfangszustand gesetzt, ohne dass ein Neustart des Industrie PCs erforderlich ist, wodurch die Verfügbarkeit des Industrie PCs erhöht wird.

## Patentansprüche

1. Verfahren zum Betreiben eines elektrischen Gerätes, das ein CPU-Modul (2) und einen Massenspeicher (4) aufweist, welcher mit einer Versorgungsspannung beaufschlagt wird und welchem über eine Leitung (5) Daten seriell übertragen werden, wobei der Massenspeicher (4) mittels eines internen Hardware-Resets (9) in einen definierten Anfangszustand gesetzt wird, falls die Versorgungsspannung eine Schwellspannung unterschreitet, **dadurch gekennzeichnet, dass** mittels eines von dem CPU-Modul (2) zu verarbeitenden Massenspeicher-Treiberbausteins (10) ein fehlender oder gestörter Informationsaustausch zwischen dem CPU-Modul (2) und dem Massenspeicher (4) erkannt wird und für den Fall eines fehlenden oder gestörten Informationsaustausches mittels eines durch ein Reset-Signal (11) steuerbaren Reset-Moduls (3) die Versorgungsspannung derart beeinflusst wird, dass die Versorgungsspannung unter die Schwellspannung begrenzt oder herabgesetzt wird, wobei nach einer vorgegebenen Zeitspanne das Reset-Signal (11) deaktiviert wird.

2. Verfahren nach Anspruch 1, **dadurch gekennzeichnet, dass** mittels des Massenspeicher-Treiberbausteins (10) das Reset-Signal (11) erzeugt und dem Reset-Modul (3) zugeführt wird.

3. Verfahren nach Anspruch 1, **dadurch gekennzeichnet, dass** mittels eines Schalters das Reset-Signal (11) erzeugt und dem Reset-Modul (3) zugeführt wird.

4. Elektrisches Gerät mit einem Massenspeicher (4), welches versehen ist mit
- einem CPU-Modul (2),
- einem Anschluss zum Anschließen an eine Versorgungsspannung,
- einem Anschluss zum Anschließen an eine für eine serielle Datenübertragung vorgesehene Datenleitung (5) und
- einer Spannungsüberwachungseinheit (8), die dazu ausgebildet ist, den Massenspeicher (4) mittels eines internen Hardware-Resets (9) in einen definierten Anfangszustand zu setzen, falls die Versorgungsspannung eine Schwellspannung unterschreitet,
**dadurch gekennzeichnet, dass** ein auf dem CPU-Modul (2) verarbeitbarer Massenspeicher-Treiberbaustein (10) zur Erkennung eines fehlenden oder gestörten Informationsaustausches zwischen dem CPU-Modul (2) und dem Massenspeicher (4)vorgesehen ist, wobei für den Fall eines fehlenden oder gestörten Informationsaustausches zur Erhöhung der Verfügbarkeit des elektrischen Gerätes (1) das elektrische Gerät (1) mit einem mittels eines Reset-Signals (11) steuerbaren Reset-Modul (3) zur Beeinflussung der Versorgungsspannung versehen ist, derart, dass das Reset-Modul (3) die Versorgungsspannung unter die Schwellspannung begrenzt oder herabsetzt, wobei der Massenspeicher-Treiberbaustein (10) nach einer vorgegebenen Zeitspanne das Reset-Signal (11) deaktiviert.

5. Elektrisches Gerät nach Anspruch 4, **dadurch gekennzeichnet, dass** der Massenspeicher-Treiberbaustein (10) zum Erzeugen des dem Reset-Modul (3) zugeführten Reset-Signals (11) vorgesehen ist.

6. Elektrisches Gerät nach Anspruch 4, **dadurch gekennzeichnet, dass** das Gerät (1) einen Schalter aufweist, welcher zum Erzeugen des dem Reset-Modul (3) zugeführten Reset-Signals (11) vorgesehen ist.

## Claims

1. Method for operating an electric device, which has a CPU module (2) and a mass storage device (4), to which a supply voltage is applied and to which data is transferred in series by way of a line (5), wherein by means of an internal hardware reset (9) the mass storage device (4) is put into a defined starting state if the supply voltage does not reach a threshold voltage, **characterised in that** an absent or faulty exchange of information between the CPU module (2) and the mass storage device (4) is recognized by means of a mass storage device drive module (10) to be processed by the CPU module (2) and in the case of an absent or faulty exchange of information, the supply voltage is influenced by means of a reset module (3) which can be controlled by a reset signal (11) such that the supply voltage is restricted or reduced to below the threshold voltage, wherein the reset signal (11) is deactivated after a predetermined period of time.

2. Method according to claim 1, **characterised in that** the reset signal (11) is generated by means of the mass storage device drive module (10) and is supplied to the reset module (3).

3. Method according to claim 1, **characterised in that** the reset signal (11) is generated by means of a switch and is supplied to the reset module (3).

4. Electric device with a mass storage device (4), which is provided with
- a CPU module (2),
- a terminal for connection to a supply voltage,
- a terminal for connection to a data line (5) provided for a serial data transfer and
- a voltage monitoring unit (8), which is embodied to put the mass storage device (4), by means of an internal hardware reset (9), into a defined starting state if the supply voltage does not reach a threshold voltage,
**characterised in that** a mass storage device drive module (10) which can be processed on the CPU module (2) is provided to recognise an absent or faulty exchange of information between the CPU module (2) and the mass storage device (4), wherein in the case of an absent or faulty exchange of information, to increase the availability of the electric device (1), the electric device (1) is provided with a reset module (3) which can be controlled by means of a reset signal (11) in order to influence the supply voltage such that the reset module (3) restricts or reduces the supply voltage to below the threshold voltage, wherein the mass storage device drive module (10) deactivates the reset signal (11) after a predetermined period of time.

5. Electric device according to claim 4, **characterised in that** the mass storage device drive module (10) is provided to generate the reset signal (11) supplied to the reset module (3).

6. Electric device according to claim 4, **characterised in that** the device (1) has a switch, which is provided to generate the reset signal (11) supplied to the reset module (3).

## Revendications

1. Procédé pour faire fonctionner un appareil électrique qui a un module CPU (2) et une mémoire (4) de masse, à laquelle est appliquée une tension d'alimentation et par lequel des données sont transmises en série par une ligne (5), la mémoire (4) de masse étant mise dans un état initial défini au moyen d'un hardware-resets (9) interne, si la tension d'alimentation devient plus basse qu'une tension de seuil, **caractérisé en ce qu'**au moyen d'un module (10) pilote de la mémoire de masse à traiter par le module CPU (2), on détecte un échange d'informations défectueux ou perturbé entre le module CPU (2) et la mémoire (4) de masse et, dans le cas d'un échange d'informations défectueux ou perturbé, on influence la tension d'alimentation au moyen d'un module reset (3) pouvant être commandé par un signal reset (11) de manière à limiter ou à abaisser la tension d'alimentation en dessous de la tension de seuil, le signal reset (11) étant désactivé après un laps de temps donné à l'avance.

2. Procédé suivant la revendication 1, **caractérisé en ce qu'**au moyen du module (10) pilote de la mémoire de masse, on produit le signal reset (11) et on l'envoie au module reset (3).

3. Procédé suivant la revendication 1, **caractérisé en ce qu'**on produit le signal reset (11) au moyen d'un interrupteur et on l'envoie au module reset (3).

4. Appareil électrique ayant une mémoire (4) de masse, qui est pourvu
- d'un module CPU (2),
- d'une borne de connexion à une tension d'alimentation,
- d'une borne de connexion à une ligne (5) de données prévue pour une transmission de données en série et
- d'une unité (8) de contrôle de la tension constituée pour mettre la mémoire (4) de masse dans un état initial défini au moyen d'un hardware-resets (9) interne si la tension d'alimentation passe en dessous d'une tension de seuil,
**caractérisé en ce qu'**un module (10) pilote de mémoire de masse pouvant être traité sur le module CPU (2) est prévu pour détecter un échange d'informations défectueux ou perturbé entre le module CPU (2) et la mémoire (4) de masse, dans lequel, dans le cas d'un échange d'informations défectueux ou perturbé, l'appareil (1) électrique est, pour augmenter la disponibilité de l'appareil (1) électrique, pourvu d'un module reset (3) pouvant être commandé au moyen d'un signal reset (11) de manière à ce que le module reset (3) limite ou abaisse la tension d'alimentation en dessous de la tension de seuil, le module (10) pilote de la mémoire de masse désactivant le signal reset (11) après un laps de temps donné à l'avance.

5. Appareil électrique suivant la revendication 4, **caractérisé en ce que** le module (10) pilote de la mémoire de masse est prévu pour produire le signal reset (11) envoyé au module reset (3).

6. Appareil électrique suivant la revendication 4, **caractérisé en ce que** l'appareil (1) a un interrupteur prévu pour produire le signal reset (11) envoyé au module reset (3).
